# EUROPEAN PATENT SPECIFICATION

(11) **EP 0 604 305 B1**
(45) Date of publication and mention of the grant of the patent: **05.08.1998**
(21) Application number: 93403124.6
(22) Date of filing: 21.12.1993
(51) Int. Cl.: C02F 1/48

(54) **Device for preparation and supply of water of hexagonal molecular structure**
Vorrichtung zur Aufbereitung von Brauchwasser mit hexagonaler Molekularstruktur
Dispositif pour la préparation et distribution d'eau de structure moléculaire hexagonale

(30) Priority: 21.12.1992 KR 2492592; 18.05.1993 KR 849493; 05.07.1993 KR 1254293; 09.09.1993 KR 1811993
(43) Date of publication of application: 29.06.1994
(73) Proprietor: LG ELECTRONICS INC., Seoul (KR)
(72) Inventor: Hwang, Gui Nan, Kimhae, Kyungsangnam-Do (KR); Lee, Jong Uk, Changwon, Kyungsangnam-Do (KR)
(74) Representative: Fort, Jacques

(56) References cited:
- EP-A- 0 290 609
- CH-A- 671 568
- FR-A- 2 597 468

## Description

### BACKGROUND OF THE INVENTION

### Field of the Invention

The present invention relates in general to preparation and supply of healthful potable water and, more particularly, to a device for preparation and supply of the healthful potable water by changing the molecular structure of the water into a hexagonal ring structure.

### Description of the Prior Art

Conventionally, potable waters are classified in accordance with their molecular structures into several types, that is, water of the hexagonal ring structure, water of the five chain structure and water of the pentagonal ring structure. Those potable waters are different from each other in their healthful effects in accordance with their molecular structures. That is, the water of the hexagonal molecular structure (hereinbelow, referred to simply as "the hexagonal water") has an excellent healthful effect on prevention of geriatric diseases such as cancers, constipation, diabetes and gastroenteric trouble. Meanwhile, the water of the pentagonal molecular structure or the pentagonal water has an excellent effect on skin beauty and treatment of skin diseases.

On the other hand, it is noted that the above waters can be changed in their molecular structures by the ions resolved therein. For example, the ions, such as lithium (Li), sodium (Na), calcium (Ca), strontium (Sr), silver (Ag) and zinc (Zn), in water change the molecular structure of the water into the hexagonal molecular structure. On the contrary, the ions, such as potassium (K), rubidium (Rb), magnesium (Mg), aluminum (Al), chlorine (Cl) and cesium (Cs), in the hexagonal water destruct the hexagonal molecular structure of the water and change the molecular structure into the pentagonal molecular structure.

In the prior art, there have been proposed several types of potable water supply devices each of which does not prepare the healthful hexagonal water but simply supplies fresh potable water through a simple water supply structure as described hereinbelow.

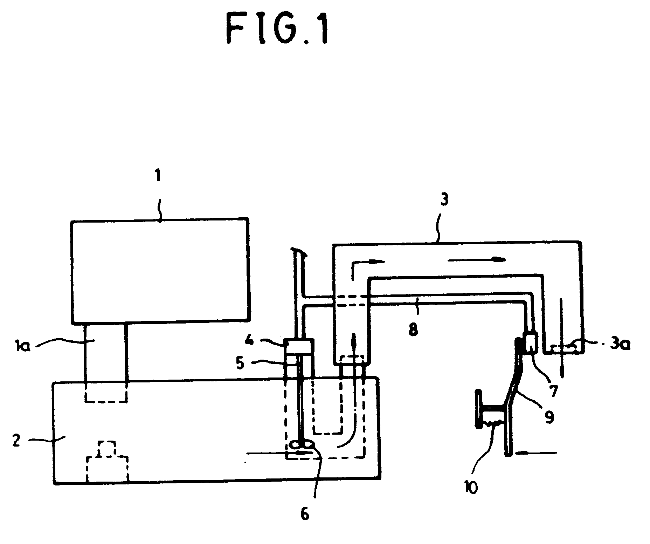

With reference to Fig. 1, there is shown a typical potable water supply device. This water supply device comprises a main reservoir 1 for containing the potable water therein and a sub-reservoir 2 connected to the main reservoir 1 through a water pipe 1a. This sub-reservoir 2 contains the water flowing out of the main reservoir 1 through the water pipe 1a of the main reservoir 1. A water supply hose 3 is connected to the sub-reservoir 2 in order to act as a water conduit for guiding the water flowing out of the sub-reservoir 2. In addition, a pumping motor 4 is provided on the sub-reservoir 2 in order to pump up the water of the sub-reservoir 2 and to supply the water through the hose 3. The rotating shaft or the output shaft 5 of this pumping motor 4 is coupled to a blade 6 at its lower end. A micro switch 7 is placed about a water discharging port 3a of the water supply hose 3. This micro switch 7 is also electrically connected to the pumping motor 4 through a power connection cable 8. The potable water supply device also comprises a water discharging lever 9 for activating the micro switch 7 in order to selectively discharge the potable water from the water discharging port 3a of the water supply hose 3 as demand. The discharging lever 9 is biased by a compression coil spring 10.

In order to supply the potable water of the above device, the water discharging lever 9 is levered as shown at the arrow of Fig. 1 under the condition that the main reservoir 1 is charged with the potable water. The micro switch 7 is thus activated in order to turn on and rotate the pumping motor 4. Upon rotation of the pumping motor 4, the blade 6 coupled to the lower end of the rotating shaft 5 of the pumping motor 4 is also rotated in the water in the sub-reservoir 2. The water in the sub-reservoir 2 is thus pumped up in order to flow in the water supply hose 3 prior to its discharging from the discharging port 3a to the user.

However, the above potable water supply device simply supplies the fresh potable water as it was. That is, a disadvantage of the above water supply device is resided in that it can not change the molecular structure of the water, so that it prepares no healthful potable water for the user.

Document FR-A-2 597 468 discloses a device for magnetizing water or any other liquid, comprising a reservoir and permanent magnets both outside and inside the reservoir.

### SUMMARY OF THE INVENTION

It is, therefore, an object of the present invention to provide a device for preparation and supply of hexagonal water of a hexagonal molecular structure which changes the molecular structure of the potable water into the hexagonal ring structure, thus to prepare and supply the healthful hexagonal water.

It is another object of the present invention to provide a device for preparation and supply of hexagonal water of a hexagonal molecular structure which is used while being installed on the outside or on the inside of a refrigerator or used as a separate-type device from the refrigerator.

It is still another object of the present invention to provide a device for preparation and supply of hexagonal water of a hexagonal molecular structure which is provided with a filter in the lower end of a connection pipe between a main water reservoir and a sub-reservoir, thus to provide purified hexagonal water for the user.

In order to accomplish the above objects, there is provided a device for preparation and supply of hexagonal water of a hexagonal molecular structure according to claim 1.

Other features are recited in the subclaims.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a schematic view showing a construction of a typical potable water supply device;
Fig. 2 is a schematic view showing a construction of a hexagonal water preparation and supply device including features which can be included in a device according to the present invention;
Fig. 3 is a schematic view showing a construction of a hexagonal water preparation and supply device in accordance with an embodiment of the present invention;
Fig. 4 is a plan view showing the connection between a water supply hose and a magnet of the hexagonal water preparation and supply device of the present invention;

### DESCRIPTION OF THE PREFERRED EMBODIMENTS

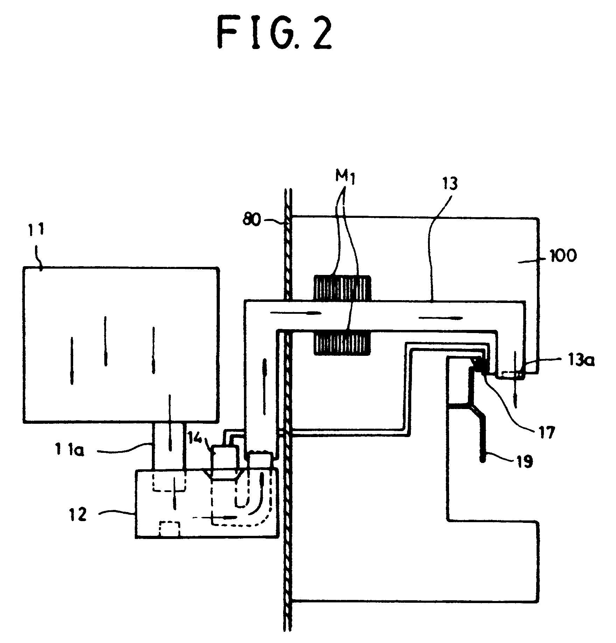

Referring first to Fig. 2, there is shown a construction of a hexagonal water preparation and supply device including features which can be included in a device according to the present invention. This hexagonal water preparation and supply device comprises a main reservoir 11 for containing the potable water therein and a sub-reservoir 12 for containing the water flowing out of the main reservoir 11 through a water pipe 11a of the main reservoir 11. A water supply hose 13 is connected to the sub-reservoir 12 in order to act as a water conduit for guiding the water flowing out of the sub-reservoir 12. In addition, a motor pump 14 is provided at a side of the sub-reservoir 12 in order to pump up the water of the sub-reservoir 12 and to supply the water to the hose 13. The hexagonal water preparation and supply device also comprises a magnet M1 which is provided on the outer surface of a middle section of the water supply hose 13. A contact switch 17 is placed about a water discharging port 13a of the water supply hose 13. This contact switch 17 is also electrically connected to the motor pump 14 through a power connection cable 18. The potable water supply device further comprises a water discharging lever 19 for coming into contact with and activating the contact switch 17 in order to discharge the hexagonal potable water from the water discharging port 13a of the water supply hose 13.

Differently from the typical water supply device of Fig. 1, the hexagonal water preparation and supply device of Fig. 2 is preferably used in the state of being integrated into a refrigerator such that the main water reservoir 11 and the sub-reservoir 12 are installed in the refrigerator.

In Fig. 2, the reference numerals 80 and 100 denote a door liner and a door of the refrigerator, respectively.

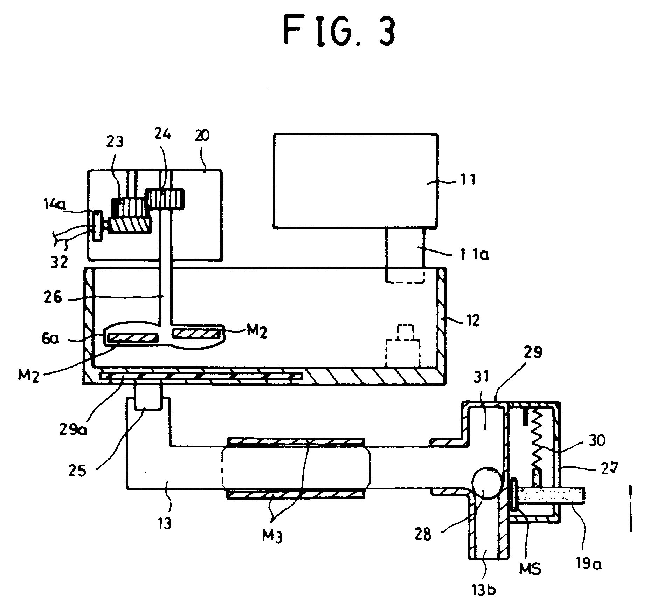

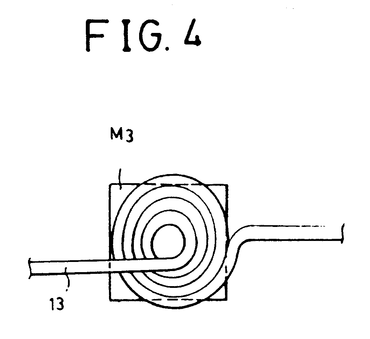

Turning to Figs. 3 and 4, there is shown a construction of a hexagonal water preparation and supply device in accordance with an embodiment of the present invention which uses a plurality of magnets. The hexagonal water preparation and supply device comprises a main reservoir 11 for containing the potable water therein and a sub-reservoir 12 for containing the water flowing out of the main reservoir 11 through a water pipe 11a of the main reservoir 11. The device also includes means for applying a rotational force to the water in the sub-reservoir 12. This rotational force applying means is supplied with the rotational force from drive means. A water supply hose 13 is connected to the sub-reservoir 12 in order to act as a water conduit for guiding the water flowing out of the sub-reservoir 12. The water supply hose 13 is provided with a pair of first magnets M3 for changing the molecular structure of the water in the hose 13 into the desired hexagonal structure. The water supply hose 13 is in turn coupled at its free end to a water discharging valve 29 which is provided at its lower section with a water discharging port 13b. The water discharging valve 29 includes water discharging control means for selectively closing the water discharging port 13b.

The rotational force applying means comprises a rotatable shaft 26, which is rotated by the rotational force of the drive means, and a blade 6a which is coupled to the lower end of the rotatable shaft 26. The blade 6a includes a pair of second magnets M2 therein. In addition, a magnetic steel plate 29a is fixedly included in a side of the bottom of the sub-reservoir 12.

On the other hand, the drive means comprises a motor box 20 and a motor 14a mounted on a left side of the inside of the motor box 20. This drive means also includes a plurality of transmission gears 22, 23 and 24 for transmission of the rotational force of the motor 14a to the rotatable shaft 26. In accordance with the present invention, the drive means is not limited to the above configuration shown in Fig. 3, but may have another configuration capable of rotating the rotatable shaft 26 using the rotational force of the motor 14a.

The water supply hose 13 is connected to a connection pipe 25 provided on the left side of the bottom of the sub-reservoir 12. In accordance with the present invention, it is preferred to locate the connection pipe 25 on a position of the bottom of the sub-reservoir 12 just below the blade 6a. As shown in Fig. 4, the hose 13 has a spiral section which is coiled in the same plane and coupled to the pair of first magnets M3 on the upper and lower surfaces of the spiral section, respectively. It should be understood that there exist a variety of different configurations of the magnets M3 which yield the same result as that described for the above embodiment without affecting the functioning of this invention.

The water discharging control means included in the water discharging valve 29 comprises a steel ball 28, which selectively closes the water discharging port 13b, and a water discharging lever 19a which is included in the water discharging valve 29 such that it is slidably lifted and lowered along a vertical guide slit 27 formed on the front surface of the valve 29. The water discharging control means further includes a third magnet MS which is mounted on the inside end of the lever 19a for magnetically lifting the steel ball 28 in accordance with the elastic lifting movement of the lever 19a for selective opening of the discharging port 13b of the valve 29. The water discharging lever 19a is biased by a biasing member. In this embodiment, the biasing member uses a compression coil spring 30 biasing the lever 19a downwards. However, it should be understood that the biasing member for biasing the lever 19a is not limited to the above compression coil spring 30, but may use another member capable of biasing the lever 19a without affecting the functioning of this invention. In addition, the water discharging valve 29 is formed with a ball receiving cavity 31 at its inside upper section for receiving the steel ball 28 which is lifted by the lifting of the lever 19a.

In Fig. 3, the reference numeral 32 denotes a power connection cable for supplying the electric power to the motor 14a of the drive means.

In order to carry out the hexagonal water preparing and supplying operation of the device according to that embodiment, the water pipe 11a of the main water reservoir 11 is opened and, thereafter, raw water is filled in the main reservoir 11. Upon accomplishing the filling of the water in the reservoir 11, the water pipe 11a is connected to a connection part of the sub-reservoir 12, thus to cause the raw water to flow from the main reservoir 11 to the sub-reservoir 12 through the water pipe 11a and to fill the sub-reservoir 12. At this state, the motor 14a of the drive means is applied with electric power from an outside power source (not shown) through the power connection cable 32, so that it is rotated and generates the rotational force. The rotational force of the motor 14a is transmitted to the rotatable shaft 26 through the plurality of transmission gears 22, 23 and 24 and in turn transmitted to the blade 6a, thus rotate this blade 6a. The rotation of the blade 6a causes circulation of the water in the sub-reservoir 12 at a desired circulation velocity. Here, since the rotating blade 6a includes the second magnets M2 therein, the circulation water is influenced by the magnetic field of the magnets M2. In addition, the magnetic steel plate 29a of the bottom of the sub-reservoir 12 is influenced by the magnetic field of the second magnets M2, so that the circulation water in the sub-reservoir 12 is wide influenced by the magnetic field of the second magnet M2 and, as a result, the molecular structure of the circulation water in the sub-reservoir 12 is changed into the desired hexagonal ring structure.

The water of the sub-reservoir 12 is also supplied to the water discharging valve 29 through the connection pipe 25 and the water supply hose 13 at a current velocity. When the water flows in the spiral section of the water supply pipe 13, it is influenced by the magnetic field of the first magnets M3 mounted on the upper and lower surfaces of the spiral section of the hose 13, so that the molecular structure of the water flowing in the spiral section of the hose 13 is again changed into the desired hexagonal ring structure. Here, the water flowing in the spiral section of the hose 13 is more effectively influenced in a smaller space by the magnetic field of the second magnets M2 thanking for the tightly coiled shape of the spiral section of the hose 13, thus improve the molecular structural changing effect of the water into the hexagonal ring structure.

In order to serve the hexagonal water prepared by the above device, a cup (not shown) is placed under the water discharging port 13b of the discharging valve 29 and, at this state, the water discharging lever 19a is lifted. As the third magnet MS is mounted on the inside end of the lever 19a, the lifting of the lever 19a causes the third magnet MS to magnetically lift the steel ball 28. Thus, the discharging port 13b of the valve 29 is opened and, as a result, the hexagonal water introduced into the valve 29 is discharged from the discharging port 13b and filled in the cup placed under the port 13b. At this time, the magnetically lifted steel ball 28 is stably received in the ball receiving cavity 31 of the inside upper section of the valve 29, thus to cause no hindrance in the hexagonal water discharging from the discharging port 13b.

The hexagonal water preparation and supply device according to that embodiment may be used as a separate type device installed in the inside of the refrigerator. In addition, this device may be used in the state of being integrated into a refrigerator such that the main water reservoir 11, the sub-reservoir 12 and the motor box 20 are installed in the refrigerator while the water supply hose 13 extends to the outside of the refrigerator in order to place the water discharging valve 29 on the outside of the refrigerator. The hexagonal water preparation and supply device of that embodiment provides more healthful water of which the molecular structure is more reliably changed into the desired hexagonal ring structure than that of Figure 2.

As described above, the hexagonal water preparation and supply device of the present invention prepares and supplies a healthful hexagonal water, which particularly has an excellent effect on prevention of diseases and retardation of ageing, by changing the molecular structure of the water into the hexagonal ring structure while the water flows in a conduit at a current velocity. In the device of the present invention, the water is applied with magnetic lines of force generated by a magnet, thus to be changed in its molecular structure into the desired hexagonal ring structure.

## Claims

1. A device for preparation and supply of fresh magnetized water having a hexagonal molecular structure, comprising
a main reservoir (11) for holding potable water therein,
a sub-reservoir (12) receiving water from the main reservoir (11) by a water pipe (11a), and
a refrigerator, said reservoir and sub-reservoir being located within the refrigerator and said sub-reservoir being provided with a water supply hose (13) for guiding water therefrom to the outside of the refrigerator,
said device further comprising
water moving means having a motor driven blade (6a) rotatably disposed in the sub-reservoir (12),
magnet means having magnets (M2) carried by the blade, and a magnetic plate (29a) disposed at the bottom of the sub-reservoir (12), said magnet means applying a magnetic field to the water in the sub-reservoir (12), and
means for causing hexagonal water to flow through the water supply hose (13) out of the sub-reservoir (12).

2. A device according to claim 1, further comprising a water discharging valve (29) coupled to a free end of said water supply hose (13), said water discharging valve (29) having a water discharging port (13b) at its lower section, and water discharging control means provided in said water discharging valve (29) for selectively opening said water discharging port (13b).

3. A device according to claim 1 or 2, further comprising :
a steel ball (28) selectively closing said water discharging port (13b) of the valve (29) ;
a water discharging lever (19a) coupled to said water discharging valve (29) such that it is slidably lifted and lowered along a vertical guide slit (27) formed on a front wall of said valve (29) ; and
a further magnet (MS) mounted on an inside end of said water discharging lever (19a) in order to magnetically lift said steel ball (28) in accordance with lifting movement of said water discharging lever (19a) and to selectively open said water discharging port (13b) of the valve (29).

4. A device according to claim 3, wherein said water discharging valve (29) is provided with a cavity (31) for receiving said steel ball (28) when this ball is lifted together with said water discharging lever (19a).

5. A device according to claim 3, wherein said water discharging lever (19a) is biased by a spring member (30) in order to automatically return to its original position.

6. A device according to any preceding claim, wherein said water supply hose (13) is coiled in the same plane at its middle section coupled to that magnet which applies a magnetic field to the water flowing through the supply hose (13).

## Patentansprüche

1. Vorrichtung zur Aufbereitung und Lieferung von frischem, magnetisierten Wasser mit einer hexagonalen Molekularstruktur mit einem Hauptreservoir (11) zur Aufbewahrung von Trinkwasser, einem Unterreservoir (12), welches über eine Wasserleitung (11a) Wasser aus dem Hauptreservoir (11) erhält, und einer Kühlanlage, wobei das Reservoir und das Unterreservoir innerhalb der Kühlanlage angeordnet sind und das Unterreservoir mit einem Wasserspeiseschlauch (13) zum Führen von Wasser aus diesem zum Äußeren der Kühlanlage versehen ist, wobei die Vorrichtung außerdem Wasserbewegungsmittel, welche eine motorisch angetriebene propellerförmige Schaufel (6a) aufweisen, die drehbar in dem Unterreservoir (12) angeordnet ist, Magnetmittel, die Magnete (M2), welche von der Schaufel getragen sind, und eine Magnetplatte (29a) aufweisen, die auf dem Boden des Unterreservoirs (12) angeordnet ist, wobei die Magnetmittel auf das Wasser in dem Unterreservoir (12) ein Magnetfeld anwenden, und Mittel aufweisen, die das Wasser mit hexagonaler Struktur veranlassen, durch den Wasserspeiseschlauch (13) aus dem Unterreservoir (12) hinauszufließen.

2. Vorrichtung nach Anspruch 1, welche außerdem ein Wasserentnahmeventil (29) aufweist, das mit dem freien Ende des Wasserspeiseschlauches (13) gekoppelt ist, wobei das Wasserentnahmeventil (29) eine Wasserentnahmeöffnung (13b) in seinem unteren Bereich und Wasserentnahmesteuermittel aufweist, die in dem Wasserentnahmeventil (29) zum selektiven Öffnen der Wasserentnahmeöffnung (13b) vorgesehen sind.

3. Vorrichtung nach Anspruch 1 oder 2, welche außerdem eine Stahlkugel (28), welche selektiv die Wasserentnahmeöffnung (13b) des Ventils (29) schließt, einen Wasserentnahmehebel (19a), der mit dem Wasserentnahmeventil (29) derart gekoppelt ist, daß er verschiebbar entlang eines vertikalen Führungsschlitzes (27), welcher in einer Vorderwand des Ventils (29) ausgebildet ist, anheb- und absenkbar ist, und einen weiteren Magneten (MS) aufweist, der auf einem innenseitigen Ende des Wasserentnahmehebels (19a) angeordnet ist, um die Stahlkugel (28) in Übereinstimmung mit der anhebenden Bewegung des Wasserentnahmehebels (19a) magnetisch anzuheben und selektiv die Wasserentnahmeöffnung (13b) des Ventils (29) zu öffnen.

4. Vorrichtung nach Anspruch 3, wobei das Wasserentnahmeventil (29) mit einem Hohlraum (31) zur Aufnahme der Stahlkugel (28) versehen ist, wenn die Kugel zusammen mit dem Wasserentnahmehebel (19a) angehoben ist.

5. Vorrichtung nach Anspruch 3, wobei der Wasserentnahmehebel (19a) von einem Federelement (30) beaufschlagt ist, um ihn automatisch in seine Originalposition zurückzubringen.

6. Vorrichtung nach irgendeinem vorangehenden Anspruch, wobei der Wasserspeiseschlauch (13) in derselben Ebene in seinem mittleren Bereich aufgewickelt ist, der mit jenem Magneten gekoppelt ist, welcher ein magnetisches Feld auf das Wasser ausübt, welches durch den Speiseschlauch (13) fließt.

## Revendications

1. Un dispositif pour la préparation et la distribution d'eau magnétisée fraîche ayant une structure moléculaire hexagonale, comprenant:
un réservoir principal (11) pour contenir de l'eau potable,
un réservoir auxiliaire (12) recevant de l'eau à partir du réservoir principal (11) par un tuyau d'eau (11a), et
un réfrigérateur, le réservoir et le réservoir auxiliaire étant placés à l'intérieur du réfrigérateur, et le réservoir auxiliaire comportant un tuyau flexible de distribution d'eau (13) pour guider l'eau du réservoir auxiliaire vers l'extérieur du réfrigérateur,
ce dispositif comprenant en outre :
des moyens de mise en mouvement de l'eau, comportant des pales (6a) entraînées par un moteur qui sont disposées de façon tournante dans le réservoir auxiliaire (12),
des moyens à aimants comportant des aimants (M2) portés par les pales, et une plaque magnétique (29a) disposée au fond du réservoir auxiliaire (12), ces moyens à aimants appliquant un champ magnétique à l'eau dans le réservoir auxiliaire (12), et
des moyens pour faire circuler de l'eau hexagonale à travers le tuyau flexible de distribution d'eau (13) à partir du réservoir auxiliaire (12).

2. Un dispositif selon la revendication 1, comprenant en outre un robinet d'évacuation d'eau (29) branché à une extrémité libre du tuyau flexible de distribution d'eau (13), ce robinet d'évacuation d'eau (29) ayant un orifice d'évacuation d'eau (13b) dans sa partie inférieure, et des moyens de commande d'évacuation d'eau incorporés dans le robinet d'évacuation d'eau (29) pour ouvrir sélectivement l'orifice d'évacuation d'eau (13b).

3. Un dispositif selon la revendication 1 ou 2, comprenant en outre :
une bille d'acier (28) qui ferme sélectivement l'orifice d'évacuation d'eau (13b) du robinet (29);
un lever d'évacuation d'eau (19a) accouplé au robinet d'évacuation d'eau (29) de façon à pouvoir être soulevé et abaissé de manière glissante le long d'une fente de guidage verticale (27) qui est formée sur une paroi avant du robinet (29); et
un amant supplémentaire (MS) monté sur une extrémité intérieure du lever d'évacuation d'eau (19a), de façon à soulever magnétiquement la bille d'acier (28) conformément à un mouvement de soulèvement du lever d'évacuation d'eau (19a) et à ouvrir sélectivement l'orifice d'évacuation d'eau (13b) du robinet (29).

4. Un dispositif selon la revendication 3, dans lequel le robinet d'évacuation d'eau (29) comporte une cavité (31) pour recevoir la bille d'acier (28) lorsque cette bille est soulevée en même temps que le levier d'évacuation d'eau (19a).

5. Un dispositif selon la revendication 3, dans lequel le lever d'évacuation d'eau (19a) est sollicité par un élément à ressort (30) de façon à retourner automatiquement à sa position d'origine.

6. Un dispositif selon l'une quelconque des revendications précédentes, dans lequel le tuyau flexible de distribution d'eau (13) est enroulé dans un même plan dans sa section intermédiaire couplée à l'aimant qui applique un champ magnétique à l'eau circulant à travers le tuyau flexible d'alimentation (13).
